# EUROPEAN PATENT SPECIFICATION

(11) **EP 0 586 057 B1**
(45) Date of publication and mention of the grant of the patent: **01.03.2000**
(21) Application number: 93305303.5
(22) Date of filing: 06.07.1993
(51) Int. Cl.: G06F 9/38

(54) **Rapid instruction (pre)fetching and dispatching using prior (pre)fetch predictive annotations**
Schnelles Vorausholen und Zuteilung von Befehlen mittels vorausschauender Anmerkungen von früher vorausgeholten
(Pré)extraction rapide et distribution d'instructions utilisant des annotations prédictives de (pré)extractions antérieures

(30) Priority: 31.08.1992 US 938371
(43) Date of publication of application: 09.03.1994
(73) Proprietor: SUN MICROSYSTEMS, INC., Mountain View, CA 94043 (US)
(72) Inventor: Yung, Robert, Fremont, California 94555 (US); Tam, Kit Sang, San Bruno, California 94066 (US); Yeung, Alfred K.W., San Francisco, California 94112 (US); Joy, William N., Aspen, Colorado 81612 (US)
(74) Representative: Wombwell, Francis

(56) References cited:
- EP-A- 0 381 444
- EP-A- 0 401 992

## Description

### BACKGROUND OF THE INVENTION

### 1. Field of the Invention:

The present invention relates to the field of computer systems. More specifically, the present invention relates to instruction prefetching and dispatching on computer systems.

### 2. Background:

Historically, when a branch instruction is dispatched, instruction fetching and dispatching on a computer system are stalled until the branch direction and the target address are resolved. Since this do nothing approach results in lower system performance, it is rarely used in today's high performance computer design. To obtain higher system performance, various techniques have been developed to allow instruction fetching and dispatching to continue in an efficient manner without waiting for the resolution of the branch direction. Central to the efficiency of continuing instruction prefetching and dispatching is the ability to predict branch direction. There are several common approaches to predicting branch direction:
1. Static prediction: Under this approach, the branch prediction algorithm always predicts the same direction which is the direction predetermined to be the higher probability direction. An example is the "branch taken" direction.
2. Dynamic software prediction: Under this approach, the branch prediction algorithm predicts the branch direction using hints suggested by the software branch prediction bit.
3. Dynamic hardware prediction: Under this approach, the branch prediction algorithm predicts the branch direction based on the branch history information maintained in a branch prediction table.

The static prediction approach is simple to implement, however, it's prediction hit rate is generally less than 75%. Such prediction hit is generally too low for high scalarness, and/or high performance designs, since the cost in repairing a misprediction is high. The dynamic software prediction approach generally works quite well when used in conjunction with a compilation technique known as trace scheduling. Without trace scheduling, the prediction hit rate is generally very low. Unfortunately, trace scheduling is pretty difficult to apply to some programs and implementations. The dynamic hardware prediction generally provides a pretty high prediction hit rate. However, it increases the complexity of the design and requires additional hardware to maintain the separate branch prediction table. Additionally, it is rather difficult to extend the size of the branch prediction table to correspond to the ever increasing cache size or the ever increasing execution rate. Furthermore, it increases the complexity for maintaining cache coherency.

Thus, it is desirable to have an approach that provides highly accurate branch prediction hit rate without incurring a substantial increase in complexity and/or hardware. It is further desirable if the approach is easily extensible to grow with the ever increasing cache size and CPU speed.

Additionally, under such highly accurate branch prediction approach, it does not make sense to give back a large portion of the performance gained on determining the next fetch address, regardless whether it is the target or the sequential next fetch address. Thus, it is further desirable if the approach also provides highly accurate dynamic next fetch address prediction. Similarly, it does not make sense to give back a large portion of the performance gained on instruction pre-fetching for control transfer. Thus, it is further desirable if the approach provides zero-latency control transfer pre-fetching.

In EP-A-0 401 992 (Advanced Micro Devices, Inc) a method and apparatus for speeding branch instructions is disclosed which implements dynamic branch prediction.

As will be disclosed, the present invention as defined in the appended claims provides a method and apparatus for rapidly pre-fetching and dispatching instructions using prior dispatch predictive annotations, also known as in-cache prediction, which achieves the objects and desired results described earlier.

### SUMMARY OF THE INVENTION

A method and apparatus for rapidly prefetching and dispatching instructions using prior dispatch predictive annotation, also known as in-cache prediction, is disclosed. m branch prediction (BRPD) fields are added to each instruction set of n instructions of each cache line of an instruction cache, where m is less than or equal to n. The m BRPD fields are used for storing m branch predictions for m "dominating" instructions of the n corresponding instructions. The BRPD fields of a cache line are initialized in accordance to a pre-established initialization policy of a branch prediction algorithm while the cache line is first brought into the instruction cache. The sets of BRPDs of a cache line are accessed concurrently with the corresponding sets of instructions of the cache line. One BRPD is selected from the set of BRPDs corresponding to the selected set of instructions. The selected BRPD is updated in accordance to a pre-established update policy of the branch prediction algorithm when the actual branch direction is resolved.

Additionally, k next fetch address prediction (NFAPD) fields are provided to each instruction set of n instructions of each cache line of the instruction cache, where k is less than or equal to m. The k NFAPD fields are used to store k next fetch address predictions for k "dominating" instructions of the n corresponding instructions. The NFAPDs predict the next target addresses of the corresponding "dominating" instructions if the corresponding BRPD fields predict "branch will be taken", else they predict the next sequential addresses of the corresponding "dominating" instructions. Similar to the BRPD fields, the NFAPD fields of a cache line are initialized in accordance to a pre-established initialization policy of a next fetch address prediction algorithm while the cache line is first brought into the instruction cache. The sets of NFAPDs of a cache line are also accessed concurrently with the corresponding sets of instructions of the cache line. One NFAPD is selected from the set of NFAPDs corresponding to the selected set of instructions. The selected NFAPD is updated in accordance with a pre-established update policy of the next fetch address prediction algorithm when the actual next fetch address is determined.

The selected NFAPD is stored immediately into the next fetch address (NFA) register of the instruction prefetch and dispatch unit, allowing the selected NFAPD to be used as the NFA for the next instruction cache access. The NFA (i.e. the selected NFAPD of the prior instruction cache access) is also used to select the BRPD and NFAPD during the next instruction cache access. As a result, instructions can be prefetched continuously down the sequential as well as the target address path with zero prefetch latency.

Furthermore, n instruction class (IClass) fields are added to each set of n instructions of each cache line of the instruction cache. The n IClass fields are used for storing n instruction classes for the n corresponding instructions. The instruction classes of a cache line are either pre-determined and pre-stored before the cache line is first brought into the instruction cache or determined and stored while the cache line is first brought into the instruction cache. Similar to the BRPDs and the NFAPDs, the sets of IClasses of a cache line are also accessed concurrently with the corresponding sets of instructions of the cache line. One IClass is selected from the set of IClasses corresponding to the selected set of instructions. The NFA is also used to select the IClass. The selected IClass is used in conjunction with the actual branch direction taken and the actual next fetch address determined by the pre-established BRPD and NFAPD update policies to prescribe the appropriate update actions.

In one embodiment, n equals 4, m and k both equal 1. Each BRPD field of an incoming cache line is initialized to predict "branch will not be taken" for all classes of control transfer instructions. When a selected BRPD field of the cache line being accessed predicts the branch direction correctly, it is not updated. On the other hand, when the selected BRPD field of the cache line being accessed predicts the branch direction incorrectly, it is updated to the actual branch direction taken. The NFAPD fields of an incoming cache line is initialized to predict the corresponding next fetch addresses to be addresses that equal the sum of the current program counter plus the cache fetch size, for all classes of control transfer instructions. When the selected NFAPD field of a cache line being accessed predicts the next fetch address correctly, it is not updated. On the other hand, when the selected NFAPD field of a cache line being accessed predicts the next fetch address incorrectly, it is updated to the actual next fetch address if the branch direction was predicted correctly, else it is updated to an address that equals the sum of the current program counter plus the cache fetch size.

In an alternate embodiment, when a selected BRPD field of the cache line being accessed predicts the branch direction correctly, it is nonetheless updated with the correct branch direction prediction.

### BRIEF DESCRIPTION OF THE DRAWINGS

The objects, features, and advantages of the present invention will be apparent from the following detailed description of the preferred embodiment of the invention with references to the drawings in which:
**Figures 1** is a functional diagram of a computer system incorporated with the teachings of the present invention.
**Figure 2** illustrates the instruction cache of the present invention.
**Figure 3** illustrates the instruction class fields, the branch prediction fields and the next fetch address prediction fields of the present invention.
**Figure 4** shows exemplary contents of the branch prediction fields and the next fetch address prediction fields for an exemplary set predictive annotation under various scenarios for one embodiment of the instruction cache.
**Figures 5a - 5b** illustrate two embodiments of the selection logic of the instruction cache.
**Figures 6a- 6b** illustrate branch prediction hit, next fetch address prediction hit, and next fetch address determinations, by the instruction prefetch and dispatch unit of the present invention.
**Figure 7** illustrates the operation flow of the instruction cache of the present invention.
**Figures 8a - 7b** illustrate the operation flow of the prefetch and dispatch unit of the present invention.
**Figures 9a - 9c** illustrate the initialization and update policies of one particular branch and next fetch address prediction algorithm.

### DETAILED DESCRIPTION

### PRESENTLY PREFERRED AND ALTERNATE EMBODIMENTS

A method and apparatus for rapidly dispatching instructions using prior dispatch predictive annotations, also known as in-cache prediction, is disclosed. The present invention has particular application for computer systems desiring highly efficient instruction prefetching and dispatching. In the following description for purposes of explanation, specific numbers, materials and configurations are set forth in order to provide a thorough understanding of the present invention. However, it will be apparent to one skilled in the art that the present invention may be practiced without the specific details. In other instances, well known systems are shown in diagrammatical or block diagram form in order not to obscure the present invention unnecessarily.

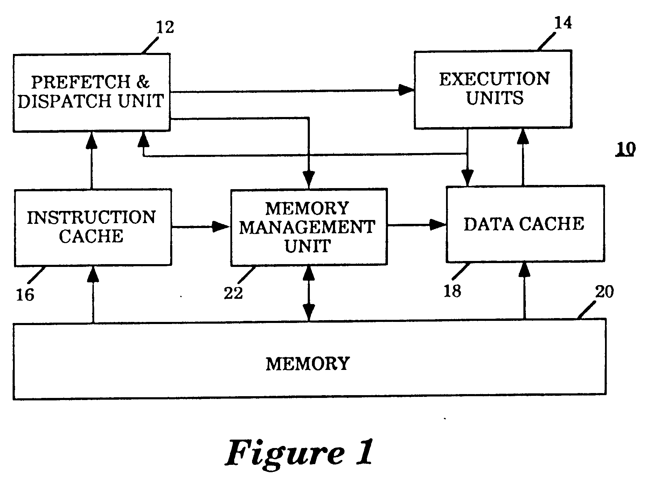

Referring now to **Figure 1,** a functional block diagram illustrating a computer system incorporating the teachings of the present invention is shown. Shown is a computer system 10 comprising an instruction prefetch and dispatch unit 12 coupled to a number of execution units 14. The computer system 10 further comprises an instruction cache 16 and a data cache 18 coupled to a memory unit 20. The instruction and data caches, 16 and 18, are also coupled to the instruction prefetch and dispatch unit 12 and the execution units 14 respectively. Additionally, the computer system 10 comprises a memory management unit 22 coupled to the instruction prefetch and dispatch unit 12, the instruction and data caches, 16 and 18, and to the memory unit 20. Cooperatively, they fetch instructions from the memory unit 20, dispatch them to the execution units 14 for execution, and store the execution results back into the memory unit 20. Except for the instruction prefetch and dispatch unit 12, and the instruction cache 16, the other elements, 14, 18 - 22, are intended to represent a broad category of these elements found in most computer systems. The constitutions and basic functions of these other elements, 14, 18 - 22, are well known and will not be described further. The instruction prefetch and dispatch unit 12, and the instruction cache 16, will be described in further detail below with references to the remaining figures.

While the present invention is being described with the computer system illustrated in **Figure 1,** based on the descriptions to follow, it will be appreciated that the present invention may be practiced with other computer systems having different architectures. In particular, the present invention may be practiced with a computer system having no memory management unit. Furthermore, the present invention may be practiced with a combined instruction/data cache or an instruction cache only.

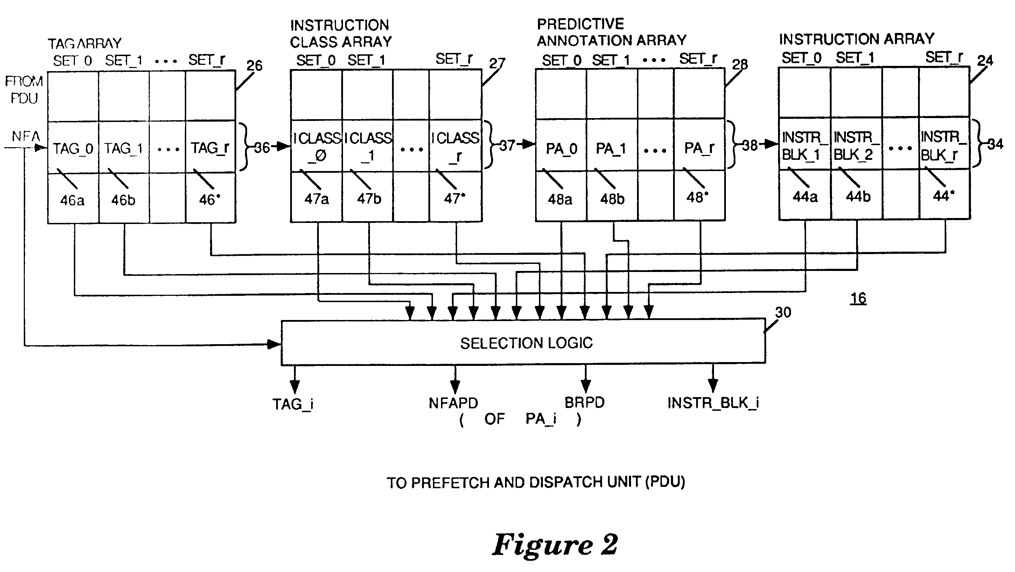

Referring now to **Figure 2,** a block diagram illustrating the instruction cache of the present invention is shown. Shown is the instruction cache 16 comprising an instruction array 24, a corresponding tag array 26, a corresponding instruction class array 27, and a corresponding predictive annotation array 28, and selection logic 30. The arrays 24 - 28 are coupled to the selection logic 30. Cooperatively, they store and provide instructions, and corresponding instruction classes, branch and next fetch address predictions to the instruction prefetch and dispatch unit.

While for ease of understanding, **Figure 2** illustrates the arrays 24 - 28 as separate units, it will be appreciated that the present invention may be practiced with the arrays 24 - 28 combined together or any combination thereof.

The instruction array 24 comprises a number of cache lines, e.g. 34, each having r sets of instruction blocks, e.g. 44a - 44*. Each set of instructions, e.g. 44a, comprises n instructions. The tag array 26 comprises corresponding tag entries, e.g. 36, each having r sets of address tags and associated control information, e.g. 46a - 46*. Each set of address tags and associated control information, e.g. 46a. comprises an address tag, and associated control information, such as valid and usage bits, for the corresponding n instructions. The contents of the address tags and associated control information, e.g. 46a - 46*, and their relations to the instruction blocks, e.g. 44a - 44*, are well known, and will not be described further.

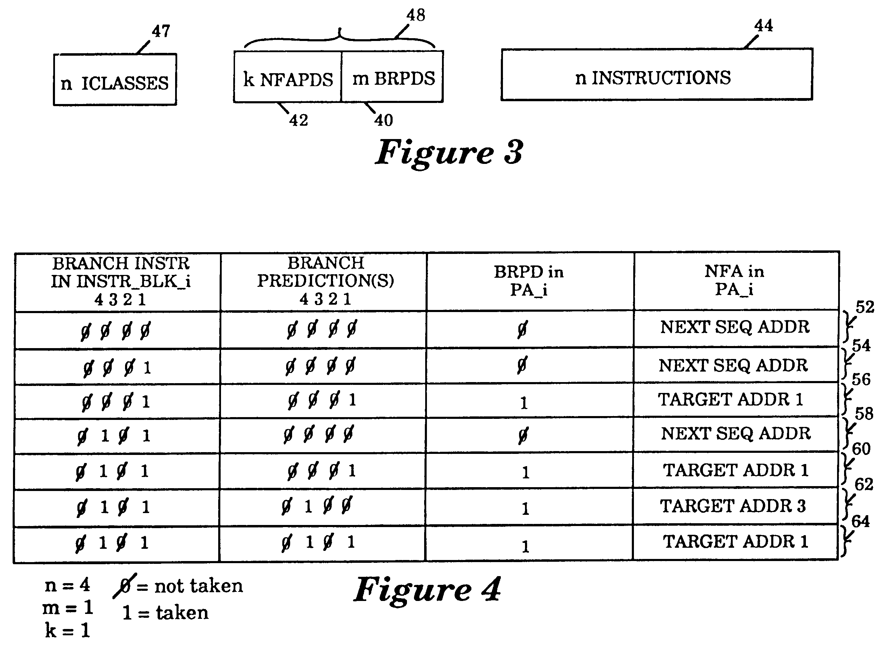

The instruction class array 27 comprises corresponding instruction class entries, e.g. 37, each having r sets of instruction classes, e.g. 47a - 47*. The predictive annotation array 28 comprises corresponding predictive annotation entries, e.g. 38, each having r sets of predictive annotations, e.g. 48a - 48*. The contents of a set of instruction classes, e.g. 47a, the contents of a set of predictive annotations, e.g. 48a, and their relations to the corresponding set of instruction blocks, e.g. 44a, are illustrated in **Figures 3 - 4.**

As shown in **Figure 3**, each set of instruction classes 47 comprises n instruction classes (IClass) 32 for the corresponding n instructions. The n instruction classes 47 store the encodings for the instruction classes of the corresponding n instructions. Particular examples of instruction classes are the program counter (PC) relative branch, register indirect branch, memory access, arithmetic and floating point operation. In one embodiment, the instructions are decoded and the instruction class encodings are stored in the IClass by the instruction cache, while the cache line is being brought into the instruction cache. In an alternate embodiment, the instructions are decoded and the instruction class encodings are stored in the IClasses before the cache line is brought into the instruction cache.

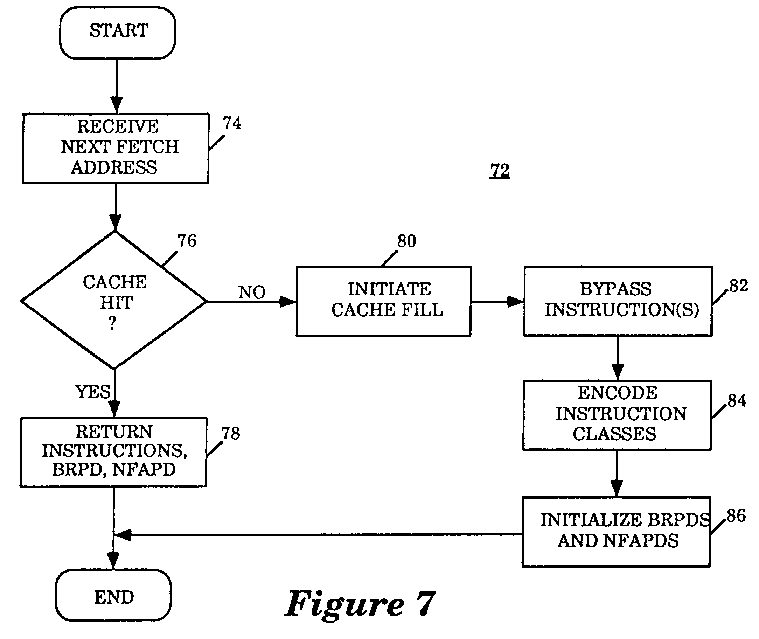

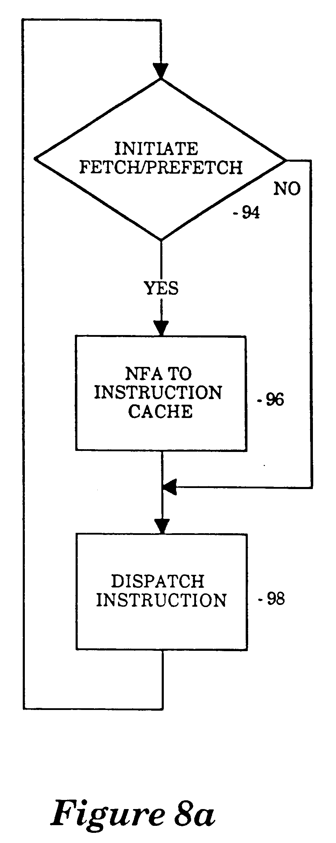

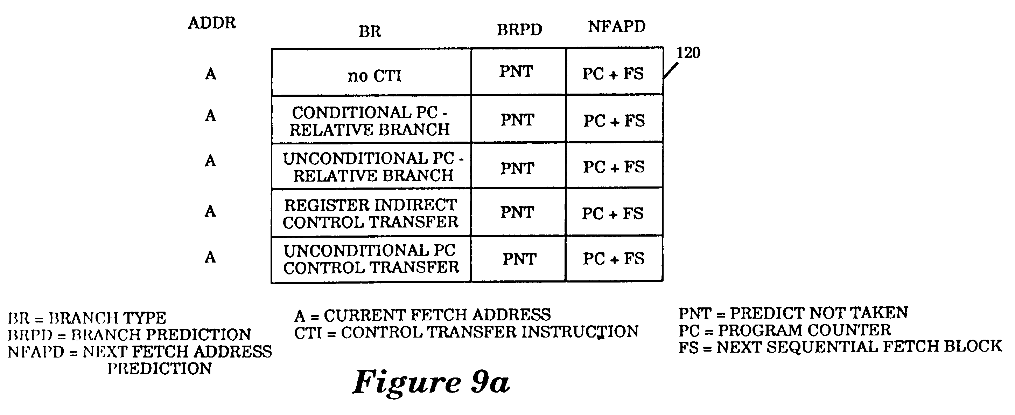

Still referring to **Figure 3,** each set of predictive annotations 48 comprises m BRPDs and k NFAPDs for the corresponding n instructions, where m and k are less than or equal to n. The m BRPDs and k NFAPDs store the branch predictions and next fetch address predictions respectively for the m and k "dominant" instructions of the corresponding n instructions respectively. Instruction dominance may be implemented in a variety of well known manners, including for example, most recently access or in program order. The BRPDs and the NFAPDs are initialized by the instruction cache, in accordance to the initialization policy of a branch and next fetch address prediction algorithm, when the cache line is first brought into the instruction cache. The BRPDs and the NFAPDs are subsequently accessed, selected, and updated by the instruction prefetch and dispatch unit, in accordance to the update policy of the branch and next fetch address prediction algorithm, as branch and next fetch address prediction hits or misses are determined by the instruction prefetch and dispatch unit. The initialization, selection, and updating of the BRPDs 40, and the NFAPDs 42, will be discussed in further detail below with references to **Figures 7** and **8a - 8b.** The branch prediction and the next fetch address prediction algorithms are application dependent, and will be discussed in further detail below with references to **Figures 9a - 9c**.

**Figure 4** further illustrates the contents of BRPDs and NFAPDs in a set of predictive annotations with exemplary BRPD and NFAPD contents of exemplary sets of predictive annotations of exemplary predictive annotation entries for cache lines of various exemplary embodiments of the instruction cache. For each of these exemplary embodiments, n = 4, m = 1, and k = 1. Furthermore, a 1-bit BRPD is used, with "0" meaning "branch not taken" is being predicted, and "1" meaning "branch taken" is being predicted. Notice that in other embodiments, alternatively, multiple bits may be used to store each BRPD, giving finer granularity and more information about each branch prediction.

The first exemplary pair of BRPD and NFAPD, "0, next seq addr", 52, illustrates an example where the corresponding set of 4 instructions comprise no branch instructions. Furthermore, the branch and next fetch address algorithms predict the "null" branch "will not be taken", and the next fetch address will be the next sequential address, respectively. Thus, BRPD is set to "0", and NFAPD is set to "next seq addr". Notice that in other embodiments, alternatively, the BRPD field corresponding to a set of instructions with no branch instructions may be ignored instead.

The second and third exemplary pairs of BRPD and NFAPD, "0, next seq addr" and "1, target addr 1", 54 and 56, illustrate two examples where the corresponding set of 4 instructions comprise a branch instruction, the first instruction. In one case, 54, the branch prediction algorithm predicts the branch "will not be taken", and the next fetch address algorithm predicts the next address will be the next sequential address. Thus, BRPD is set to "0", and NFAPD is set to "next seq addr". In the other case, 56, the branch prediction algorithm predicts the branch "will be taken", and the next fetch address algorithm predicts the next address will be the next target address of the first instruction. Thus, BRPD is set to "1", and NFAPD is set to "target addr 1".

The fourth and fifth exemplary pairs of BRPD and NFAPD, "0, next seq addr" and "1, target addr 1", 58 and 60, illustrate two examples where the corresponding set of 4 instructions comprise two branch instructions, the first and the third instruction. In one case, 58, the branch prediction algorithm predicts both branches "will not be taken", and the next fetch address algorithm predicts the next address will be the next sequential address. Thus, BRPD is set to "0", and NFAPD is set to "next seq addr". In the other case, 60, the branch prediction algorithm predicts the first branch instruction, i.e. the first instruction, "will be taken", but the second branch instruction, i.e. the third instruction, "will not be taken". Assume further that, under this example, program execution starts with the first instruction of the 4-instruction set, the next fetch address algorithm predicts the next address will be the next target address of the first branch instruction, i.e. the first instruction. Thus, BRPD is set to "1", and NFAPD is set to "target addr 1".

The sixth and seventh exemplary pairs of BRPD and NFAPD, "1, target addr 3" and "1, target addr 1", 62 and 64, illustrate two examples where the corresponding set of 4 instructions comprise two branch instructions, the first and third instruction. In one case, 62, the branch prediction algorithm predicts the first branch instruction, i.e. the first instruction, "will not be taken", but the second branch instruction, i.e. the third instruction "will be taken", and the next fetch address algorithm predicts the next address will be the target address of the second branch instruction, i.e. the third instruction. Thus, BRPD is set to "1", and NFAPD is set to "target address 3". In the other case, 64, the branch prediction algorithm predicts both branch instructions "will be taken". Assume further that, under this example, instruction dominance is implemented based on most recent access, and the first instruction is the more recently accessed instruction between the first and the third instruction, the next fetch address algorithm predicts the next address will be the next target address of the first branch instruction, i.e. the more recently accessed first instruction. Thus, BRPD is set to "1", and NFAPD is set to "target addr 1".

While the present invention is being described with each set of predictive annotations having m BRPDs and k NFAPDs, it will be appreciated that the present invention may be practiced with each set of predictive annotations having only m BRPDs and no NFAPDs. In such embodiments, the NFA may be computed by the instruction prefetch and dispatch unit based on the selected BRPD.

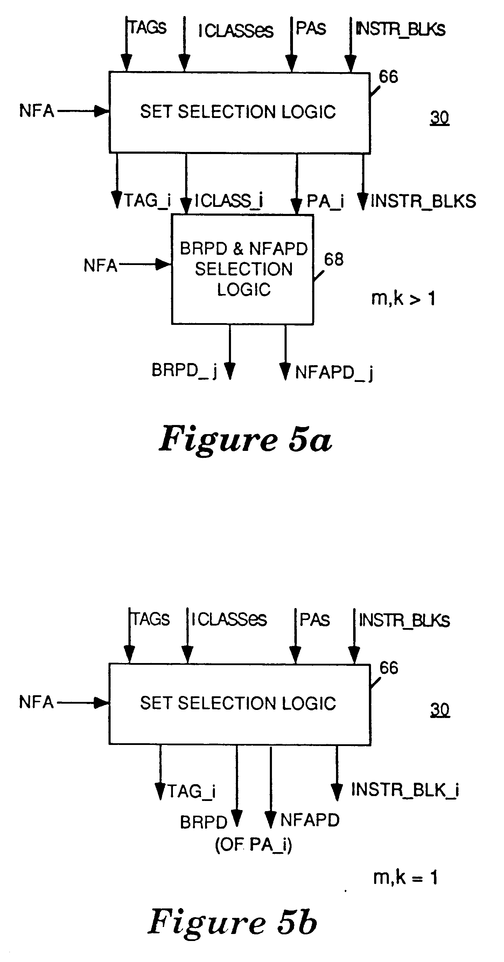

Referring back to **Figure 2,** the instruction cache 16 receives a next fetch address from the instruction prefetch and dispatch unit as input. In response, the instructions stored in one of the cache lines, and their corresponding tag and predictive annotations entries, are accessed and provided to the selection logic 30. The selection logic 30 selects a set of instructions, a branch prediction and a next fetch address prediction, and provides them to the instruction prefetch and dispatch unit. The branch and next fetch address predictions are selected from the corresponding set of predictive annotation. Two embodiments of the selection logic 30 are illustrated in **Figures 5a - 5b**.

**Figure 5a** illustrates an embodiment of the selection logic where m and k are both greater than 1. The instruction sets (Instr_Blks) and the corresponding sets of tags (TAGs), instruction classes (IClasses) and predictive annotations (PAs) retrieved from the respective arrays are first provided to a set selection logic 66. The set selection logic 66 selects a set of instruction and its corresponding sets of tags (TAG_i), instruction classes (IClass_i), and predictive annotations (PA_i) using the current fetch address (NFA). The selected sets of instruction classes (IClass_i), and predictive annotations (PA_i) are then provided to the BRPD and NFAPD selection logic 68. The BRPD and NFAPD selection logic 68 selects a BRPD (BRPD_j) and a NFAPD (NFAPD_j) from the m BRPDs and k NFAPDs of the selected set of predictive annotations (PA_i), using the current fetch address (NFA).

The set selection logic 66 is intended to represent a broad category of selection logic found in most computer systems, including the selection logic described in U.S. Patent US-A-5392414, filed on 6/30/92, entitled Rapid Data Retrieval From A Data Storage Using Prior Access Predictive Annotation, assigned to the same assignee of the present invention. The BRPD and NFAPD selection logic 68 may be implemented with various combinatorial logics, which are well known.

**Figure 5b** illustrates an embodiment of the selection logic where m and k both equal 1. The embodiment is substantially the same as the embodiment illustrated in **Figure 5a,** except that the BRPD and NFAPD selection logic is not required, since m and k both equal 1. By eliminating the BRPD and NFAPD selection logic, BRPD and NFAPD are selected as soon as the instruction block is selected.

It will be appreciated that the value of m and k are design dependent. As m or k increases towards n, the likelihood of branch and next fetch address prediction hits will increase, however, the latency between fetches will also increase as a result of the increased time required to select the branch and next fetch address prediction. On the other hand, as m or k decreases towards 1, the likelihood of branch and next fetch address prediction hits will decrease, however, the latency between fetches will also decrease as a result of the decreased time required to select the branch and next fetch address prediction. In fact, when m and k both equal 1, as illustrated by the embodiment shown in **Figure 6b,** the BRPD and NFAPD selection logic may be eliminated, allowing the BRPD and NFAPD to be selected simultaneously with the instruction block. Based on the descriptions to follow, it will be appreciated that the elimination of the BRPD and NFAPD selection logic facilitates reducing the instruction fetch latency to zero. In other words, the next fetch may proceed without regard to the instructions of the current fetch.

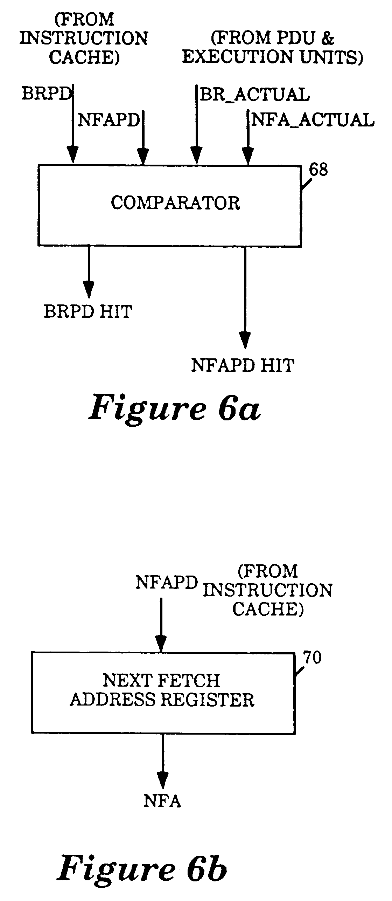

Referring now to **Figures 6a - 6b,** two block diagrams illustrating branch prediction hit, next fetch address prediction hit, and next fetch address determination by the instruction prefetch and dispatch unit of the present invention are shown. As shown in **Figure 6a,** the instruction prefetch and dispatch unit comprises a comparator 68. The comparator 68 receives the BRPD and the NFAPD from the instruction cache, and the actual branch and next fetch address resolutions from the prefetch and dispatch unit or the execution units, as inputs. In response, the comparator outputs a branch prediction hit/miss and a next fetch address hit/miss signal. It will be appreciated that the actual branch and next fetch address resolutions may be received separately, therefore the branch and the next fetch address hit/miss signals may be generated at different times. The comparator 68 is intended to represent a broad category of comparators found in most computer systems. Its constitutions and basic functions are well known and will not be described further.

Additionally, as shown in **Figure 6b,** the instruction prefetch and dispatch unit further comprises a next fetch address register 70. The NFAPD received from the instruction cache is immediately stored into the next fetch address register, and used as the fetch address (NFA) for the next instruction fetch. It will be appreciated that if NFAPD is selected simultaneously with the instruction block, as in the case of the embodiment illustrated in **Figure 5b,** the storing of the NFAPD directly into the NFA register and using it as the NFA of the next instruction fetch, results in zero fetch latency between successive instruction fetches.

Referring now to **Figure 7,** a flow diagram illustrating the operation flow of the instruction cache is shown. The instruction cache receives the fetch address from the instruction prefetch and dispatch unit, block 74. In response, the instruction cache determines if there is a cache hit, block 76. If there is a cache hit, as described earlier, the instruction cache selects and provides a set of instructions, a branch prediction and a next fetch address prediction to the instruction prefetch and dispatch unit, block 78.

If there is a cache miss, the instruction cache initiates a cache fill, block 80. As the cache line is filled with instructions returned from memory, the instructions are by-passed to the instruction prefetch and dispatch unit, block 82. Alternatively, the instructions may be provided to the instruction prefetch and dispatch unit after the cache line is filled. As described earlier, for the embodiment where the instructions are not predecoded and the instruction classes are not prestored, the instruction cache further decodes the instructions and stores the instruction classes into the IClasses while the cache line is being filled, block 84. Additionally, the m BRPDs and k NFAPDs corresponding to the sets of n instructions of the cache line being filled are initialized in accordance to the initialization policy of the branch and next fetch address prediction algorithm, block 86.

Referring now to **Figures 8a - 8b,** two flow diagrams illustrating the operation flow of the instruction prefetch and dispatch unit are shown. As shown in **Figure 8a,** the instruction prefetch and dispatch unit determines if a fetch/prefetch should be initiated, block 94. If a fetch/prefetch should be initiated, the instruction prefetch and dispatch unit drives the next fetch address (NFA) from the NFA register to the instruction cache, block 96. In response, the instruction cache provides the instruction prefetch and dispatch unit with the requested instruction block, and the instruction prefetch and dispatch unit queues the returned instruction block. As described earlier, the NFA in the NFA register is the selected NFAPD received from the instruction cache in conjunction with the instruction block received for the last fetch. In the meantime, if the instruction queue is non-empty, the instruction prefetch and dispatch unit dispatches one or more instruction, depending on the system architecture, block 98. The instruction prefetch and dispatch unit repeats the above process steps, block 94 - 98, until the computer system is shut down.

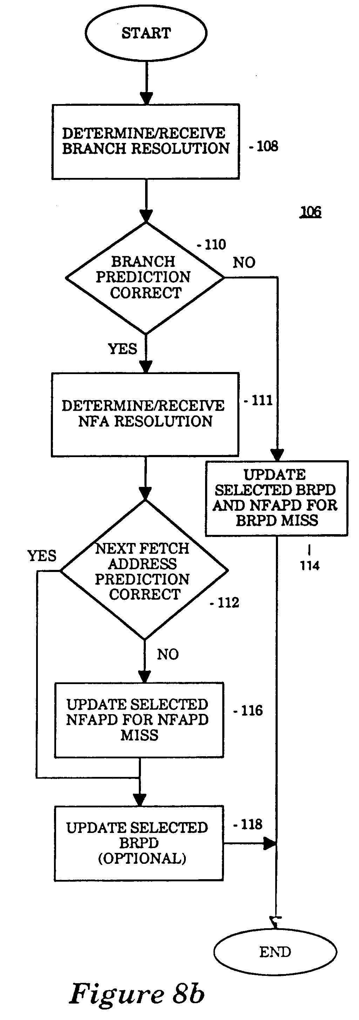

As shown in **Figure 8b,** concurrently, the instruction prefetch and dispatch unit determines the branch resolution or receives the branch resolution from the execution units, block 108. The instruction prefetch and dispatch unit then determines if there is a branch prediction hit, block 110. If the selected BRPD predicted the branch direction incorrectly, the instruction prefetch and dispatch unit accesses the instruction cache and updates the previously selected BRPD and the NFAPD in the previously accessed cache line accordingly, block 114. If the selected BRPD predicted the branch direction correctly, subsequently upon determining the next fetch address resolution or receiving the next fetch address resolution from the execution units, block 111, the instruction prefetch and dispatch unit determines if there is a next fetch address hit, block 112. If the selected NFAPD predicted the next fetch address incorrectly, the instruction prefetch and dispatch unit accesses the instruction cache and updates the previously selected NFAPD in the previously accessed cache line, block 116. Additionally, regardless whether the selected NFAPD predicted the next fetch address correctly, optionally, for ease of implementation, the instruction prefetch and dispatch unit may nonetheless also update the previously selected BRPD in the previously accessed cache line, block 118.

Referring now to **Figures 9a - 9c,** three block diagrams illustrating the initialization and update policies of an exemplary branch and next fetch address prediction algorithm are shown. The exemplary branch next fetch address prediction algorithm assures the branch predictions are single bit. Shown in **Figure 9a** is the initialization policy table 120 of the particular branch and next fetch address prediction algorithm. Regardless of instruction class, the BRPDs are initialized to predict "branch will not be taken", and the NFAPDs are initialized to predict the next fetch address to be an address that equals the sum of the current program counter and the next sequential fetch block size. Depending on implementation, the next sequential fetch block size may or may not have to be adjusted for cache block boundary alignment. It will be appreciated that by initializing the BRPDs and NFAPDs for all instructions the same way regardless of instruction class, the implementation is simplified. While simplification of implementation will result in the BRPDs and NFAPDs for the unconditional PC-relative and register indexed instructions to miss on their first prediction, by virtue of the update policy to be described, they will miss only once, unless there is external interference, e.g. multiple branches sharing same prediction fields.

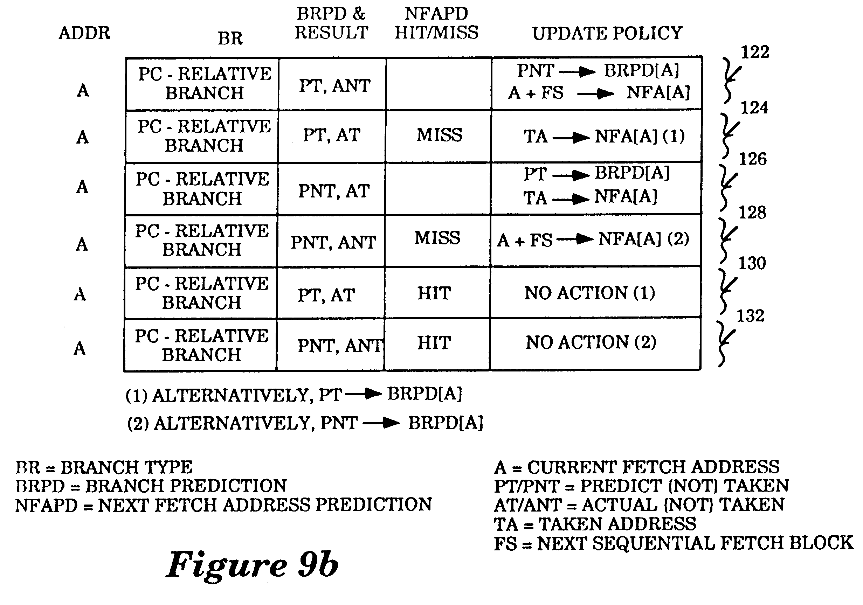

**Figure 9b** illustrates the update policy for program counter relative branch instructions for the particular branch and next fetch address prediction algorithm. In the first case, where the selected BRPD predicts the branch "will be taken", and the branch is not taken, 122, the selected BRPD is updated to the correct prediction, i.e. "will not be taken", and the selected NFAPD is updated to the sum of the current fetch address and the next sequential fetch block size. In the second case, where the selected BRPD predicts the branch "will be taken", and the branch is taken, but the NFAPD misses, 124, the selected NFAPD is updated to the correct fetch address, i.e. the target address.

In the third case, where the selected BRPD predicts the branch "will not be taken", and the branch is taken, 126, the selected BRPD is updated to the correct prediction, i.e. "will be taken", and the selected NFAPD is updated to the correct fetch address, i.e. the target address. In the fourth case, where the selected BRPD predicts the branch "will not be taken", and the branch is not taken, but the NFAPD misses, 128, the selected NFAPD is updated to the sum of the current fetch address and the next sequential fetch block size.

In the fifth case, where the selected BRPD predicts the branch "will be taken", and the branch is taken with the NFAPD successfully predicting the next fetch target address, 130, the selected BRPD and NFAPD are not updated. Similarly, in the sixth case, where the selected BRPD predicts the branch "will not be taken", and the branch is not taken, with the NFAPD successfully predicting next fetch sequential address, 132, the selected BRPD and NFAPD are not updated.

As described earlier, in the first and third case, depending on the implementation, the next sequential fetch block size may or may have to be adjusted for cache block boundary alignment. Additionally, in the second, fifth, and sixth case, BRPD may nonetheless be updated with the actual branch direction, instead of taking no action.

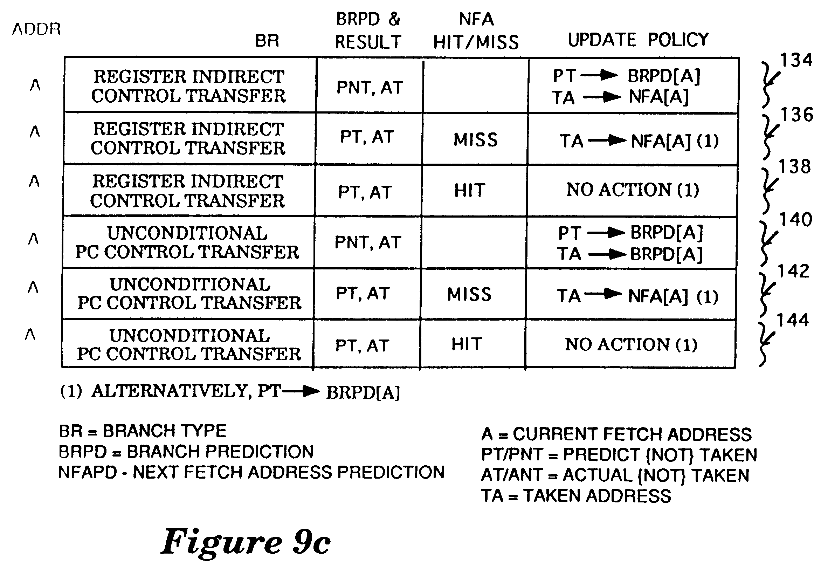

**Figure 9c** illustrates the update policy for register indirect control transfer and unconditional program counter relative control transfer for the particular branch and next fetch address prediction algorithm. In the first and fourth case, where the selected BRPD predicts the branch "will not be taken", and the branch is taken, 134 and 140, the selected BRPD is updated to the correct prediction, i.e. "will be taken", and the selected NFAPD is updated to the correct fetch address, i.e. the target address.

In the second and fifth case, where the selected BRPD predicts the branch "will be taken", and the branch is taken with the NFAPD misses, 136 and 142, the selected NFAPD is updated to the correct fetch address, i.e. the target address. In the third and sixth case, where the selected BRPD predicts the branch "will be taken", and the branch is taken with the NFAPD successfully predicting the next fetch target address, 140 and 144, the selected BRPD and NFAPD are not updated. Similarly, in the third and sixth case, BRPD may nonetheless be updated with the actual branch direction, instead of taking no action.

## Claims

1. A computer system comprising an execution unit for executing instructions of a computer program, characterised by
circuitry (16) for fetching instructions from memory (20);
circuitry (16) for decoding each instruction independently to determine the class of each instruction without regard for any dependency of the instruction on any other instructions; and
an instruction cache (16) for storing each instruction and the independent corresponding class information for that instruction.

2. The computer system of claim 1, wherein the class of the instruction is selected from a group including floating point operations, integer operations, memory access operations, and branch operations.

3. The computer system of claim 1, wherein data indicating the class of the fetched instruction and the instruction are stored in a cache line (34) in the instruction cache (16);

4. The computer system of claim 1, including:
instruction cache (16) for storing a plurality of the instructions of the computer program, said instruction cache characterised by:
an instruction field for storing a first instruction among the plurality of instructions;
an instruction address field for storing an address corresponding to the first instruction;
a next address fetch field, associated with the first instruction, for storing a next fetch address corresponding to a second instruction, the next fetch address for unconditionally fetching the second instruction when the first instruction is fetched.

5. The computer system of claim 4, further comprising a next fetch address register (70), coupled to the instruction cache (16), for receiving the next fetch address corresponding to the second instruction when the first instruction is fetched from the instruction cache (16).

6. The computer system of claim 5, further comprising a prefetch and dispatch unit (12), coupled to the next fetch address register (70), for fetching the second instruction when the next fetch address is received by the next fetch address register (70).

7. The computer system of claim 6, wherein the execution unit (14) is coupled to the prefetch and dispatch unit (12), for executing the first instruction after the prefetch and dispatch unit (12) dispatches the first instruction to the execution unit (14).

8. The computer system of claim 4, wherein the next fetch address is a sequential address following the first instruction.

9. The computer system of claim 4, wherein the first instruction is a branch instruction and the instruction cache further comprises a branch prediction field for storing branch prediction information.

10. The computer system of claim 9, wherein the branch prediction information in the branch prediction field (40) is for predicting branch not taken, and the next address fetch field is for storing the sequential address after the first instruction.

11. The computer system of claim 9, wherein the branch prediction information in the branch prediction field (40) is for predicting branch taken, and the next address fetch field (42) is for storing a target address of the first instruction.

12. The computer system of claim 9, wherein the branch prediction information is dynamically updated in accordance with a branch prediction algorithm.

13. The computer system of claim 4, wherein the execution unit (14) is coupled to the instruction cache (16), for executing the first instruction, the execution unit (14) further including a resolve unit for resolving an actual next fetch address of the first instruction, and a compare circuit (68) for comparing the actual next fetch address with the next fetch address contained in the next address fetch field (42) associated with the first instruction.

14. The computer system of claim 13, further comprising a prefetch unit (12), coupled to the execution unit (14) and the instruction cache (16), for fetching a third instruction corresponding to the actual next fetch address and providing the third instruction to the execution unit (14) for execution if the compare circuit (68) determines that the actual next fetch address of the first instruction and the next fetch address contained in the next address fetch field (42) associated with the first instruction are different.

15. The computer system of claim 14, wherein execution of the computer program resumes at the third instruction if the compare circuit determines that the actual next fetch address of the first instruction and the next fetch address contained in the next address fetch field associated with the first instruction are different.

16. The computer system of claim 14, wherein the next address fetch field (42) associated with the first instruction is updated with the actual next fetch address of the first instruction and the next fetch address contained in the next address fetch field (42) associated with the first instruction are different.

17. The computer system of claim 4, wherein the second instruction is fetched from the instruction cache (16).

18. The computer system of claim 4, wherein the second instruction is fetched from memory (20) if the second instruction is not in the instruction cache (16).

19. The computer system of claim 4, wherein the second instruction is fetched and speculatively dispatched to the execution unit (14) for execution.

20. The computer system of claim 4, wherein the plurality of instructions stored in the instruction cache (16) are arranged in a number of cache lines, each one of the number of cache lines (34) including (n) of the plurality of instructions stored in the cache (16).

21. The computer system of claim 20, wherein each of the number of cache lines (34) includes (k) of the next address fetch field addresses (42), where (k) is equal to or less than (n).

22. The computer system of claim 20, wherein each of the number of cache lines (34) includes (m) branch prediction elements (40), where (m) is equal to or less than (n).

23. The computer system of claim 20, wherein each of the number of cache lines (34) includes a branch prediction field (40) for storing branch prediction information for a dominating instruction among the (n) instructions in each of the number of cache lines (34) in the instruction cache (16).

24. The computer system of claim 4, wherein the next fetch address stored in the next address fetch field (40) associated with the first instruction is initialized in accordance with a predetermined policy when the first instruction is placed into the instruction cache (16) from memory (20).

25. The computer system of claim 4, wherein the instruction cache (16) further includes an instruction decode field for storing instruction decode information for the first instruction.

26. The computer system of claim 25, wherein the instruction decode information includes a class identifier for identifying the class of the first instruction.

27. The computer system of claim 4, wherein the next fetch address is a predicted next fetch address.

28. A method of providing a computer system for executing instructions of a computer program, the computer system comprising an execution unit, the method characterised by the steps of:
providing circuitry (16) for fetching instructions from memory;
providing circuitry (16) for decoding each instruction independently to determine the class of each instruction without regard for any dependency of the instruction on any other instructions; and
providing an instruction cache (16) for storing each instruction and the independent corresponding class information for that instruction.

29. The method of claim 28, wherein the class of the instruction is selected from a group including floating point operations, integer operations, memory access operations, and branch operations.

30. The method of claim 29, wherein data indicating the class of the fetched instruction and the instruction are stored in a cache line (34) of the instruction cache (16).

31. The method of claim 28 further characterised by the steps of:
providing an instruction cache (16) for storing a plurality of the instructions of the computer program, the instruction cache (16) including:
providing an instruction field for storing a first instruction among the plurality of instructions;
providing an instruction address field for storing an address corresponding to the first instruction;
providing a next address fetch field (42), associated with the first instruction, for storing a next fetch address corresponding to a second instruction, the next fetch address for unconditionally fetching the second instruction when the first instruction is fetched.

32. The method of claim 31, further comprising the steps of providing a next fetch address register (70), coupled to the instruction cache (16), for receiving the next fetch address corresponding to the second instruction when the first instruction is fetched from the instruction cache (16).

33. The method of claim 32, further comprising the step of providing a prefetch and dispatch unit (12), coupled to the next fetch address register (70), for fetching the second instruction when the next fetch address is received by the next fetch address register (70).

34. The method of claim 33 wherein the execution unit (14) is coupled to the prefetch and dispatch unit (12), the step comprising of executing the first instruction after the prefetch and dispatch unit (12) dispatches the first instruction to the execution unit (14).

## Patentansprüche

1. Ein Computersystem mit einer Ausführungseinheit zum Ausführen von Befehlen eines Computerprogramms, gekennzeichnet durch
eine Schaltung (16) zum Abrufen von Befehlen aus einem Speicher (20);
eine Schaltung (16) zum unabhängigen Decodieren jedes Befehls ohne Rücksicht auf irgendwelche Abhängigkeiten des Befehls von irgendwelchen anderen Befehlen , um die Klasse des jeweiligen Befehls zu bestimmen; und
einen Befehls-Cache (16) zum Speichern des jeweiligen Befehls und der unabhängigen zugehörigen Klasseninformationen für diesen Befehl.

2. Das Computersystem nach Anspruch 1, wobei die Klasse des Befehls aus einer Gruppe ausgewählt ist, die Gleitkommaoperationen, Ganzzahloperationen, Speicherzugriffsoperationen und Verzweigungsoperationen umfaßt.

3. Das Computersystem nach Anspruch 1, wobei die Klasse des abgerufenen Befehls anzeigende Daten und der Befehl in einer Cache-Zeile (34) in dem Befehls-Cache (16) gespeichert werden.

4. Das Computersystem nach Anspruch 1, aufweisend:
einen Befehls-Cache (16) zum Speichern einer Mehrzahl der Befehle des Computerprogramms, wobei der Befehls-Cache gekennzeichnet ist durch:
ein Befehlsfeld zum Speichern eines ersten Befehls der Mehrzahl von Befehlen;
ein Befehlsadreßfeld zum Speichern einer Adresse, die dem ersten Befehl entspricht;
ein dem ersten Befehl zugeordnetes Nächster-Adreßabruf-Feld zum Speichern einer nächsten Abrufadresse, die einem zweiten Befehl entspricht, wobei die nächste Abrufadresse dem unbedingten Abrufen des zweiten Befehls, wenn der erste Befehl abgerufen worden ist, dient.

5. Das Computersystem nach Anspruch 4, ferner aufweisend ein mit dem Befehls-Cache (16) gekoppeltes Nächste-Abrufadresse-Register (70) zum Empfangen der dem zweiten Befehl entsprechenden nächsten Abrufadresse, wenn der erste Befehl aus dem Befehls-Cache (16) abgerufen worden ist.

6. Das Computersystem nach Anspruch 5, ferner aufweisend eine mit dem Nächste-Abrufadresse-Register (70) gekoppelte Vorabruf- und Abfertigungseinheit (12) zum Abrufen des zweiten Befehls, wenn die nächste Abrufadresse von dem Nächste-Abrufadresse-Register (70) empfangen worden ist.

7. Das Computersystem nach Anspruch 6, wobei die Ausführungseinheit (14) mit der Vorabruf- und Abfertigungseinheit (12) gekoppelt ist, um den ersten Befehl auszuführen, nachdem die Vorabruf- und Abfertigungseinheit (12) den ersten Befehl an die Ausführungseinheit (14) abgefertigt hat.

8. Das Computersystem nach Anspruch 4, wobei die nächste Abrufadresse eine dem ersten Befehl nachfolgende sequentielle Adresse ist.

9. Das Computersystem nach Anspruch 4, wobei der erste Befehl ein Verzweigungsbefehl ist und der Befehls-Cache ferner ein Verzweigungsvorhersagefeld zum Speichern von Verzweigungsvorhersageinformationen aufweist.

10. Das Computersystem nach Anspruch 9, wobei die Verzweigungsvorhersageinformationen in dem Verzweigungsvorhersagefeld (40) dem Vorhersagen, daß die Verzweigung nicht genommen wird, dienen, und wobei das Nächste-Adreßabruf-Feld dem Speichern der sequentiellen Adresse nach dem ersten Befehl dient.

11. Das Computersystem nach Anspruch 9, wobei die Verzweigungsvorhersageinformationen in dem Verzweigungsvorhersagefeld (40) der Vorhersage dienen, daß die Verzweigung genommen wird, und wobei das Nächste-Adreßabruf-Feld (42) dem Speichern einer Zieladresse des ersten Befehls dient.

12. Das Computersystem nach Anspruch 9, wobei die Verzweigungsvorhersageinformationen dynamisch in Übereinstimmung mit einem Verzweigungsvorhersagealgorithmus aktualisiert werden.

13. Das Computersystem nach Anspruch 4, wobei die Ausführungseinheit (14) zum Ausführen des ersten Befehls mit dem Befehls-Cache (16) gekoppelt ist, wobei die Ausführungseinheit (14) ferner eine Entscheidungseinheit zum Entscheiden einer tatsächlichen nächsten Abrufadresse des ersten Befehls und eine Vergleichsschaltung (68) zum Vergleichen der tatsächlichen nächsten Abrufadresse mit der in dem dem ersten Befehl zugeordneten Nächste-Adreßabruf-Feld (42) enthaltenen nächsten Abrufadresse aufweist.

14. Das Computersystem nach Anspruch 13, ferner aufweisend eine mit der Ausführungseinheit (14) und dem Befehls-Cache (16) gekoppelte Vorabrufeinheit (12), zum Abrufen eines dritten Befehls, der der tatsächlichen nächsten Abrufadresse entspricht, und zum Liefern des dritten Befehls an die Ausführungseinheit (14) zum Ausführen, sofern die Vergleichsschaltung (68) feststellt, daß die tatsächliche nächste Abrufadresse des ersten Befehls und die nächste Abrufadresse, die in dem dem ersten Befehl zugeordneten Nächste-Adreßabruf-Feld (42) enthalten ist, verschieden sind.

15. Das Computersystem nach Anspruch 14, wobei die Ausführung des Computerprogramms an dem dritten Befehl wieder aufgenommen wird, sofern die Vergleichsschaltung feststellt, daß die tatsächliche nächste Abrufadresse des ersten Befehls und die nächste Abrufadresse, die in dem dem ersten Befehl zugeordneten Nächste-Adreßabruf-Feld enthalten ist, verschieden sind.

16. Das Computersystem nach Anspruch 14, wobei das dem ersten Befehl zugeordnete Nächste-Adreßabruf-Feld (42) aktualisiert wird, wenn die tatsächliche nächste Abrufadresse des ersten Befehls und die nächste Abrufadresse, die in dem dem ersten Befehl zugeordneten Nächste-Adreßabruf-Feld (42) enthalten ist, verschieden sind.

17. Das Computersystem nach Anspruch 4, wobei der zweite Befehl aus dem Befehls-Cache (16) abgerufen wird.

18. Das Computersystem nach Anspruch 4, wobei der zweite Befehl aus dem Speicher (20) abgerufen wird, sofern der zweite Befehl sich nicht in dem Befehls-Cache (16) befindet.

19. Das Computersystem nach Anspruch 4, wobei der zweite Befehl abgerufen und spekulativ an die Ausführungseinheit (14) zur Ausführung abgefertigt wird.

20. Das Computersystem nach Anspruch 4, wobei die Mehrzahl von in dem Befehls-Cache (16) gespeicherten Befehlen in einer Anzahl von Cache-Zeilen angeordnet sind, wobei jede der Anzahl von Cache-Zeilen (34)(n) der Mehrzahl von in dem Cache (16) gespeicherten Befehlen enthält.

21. Das Computersystem nach Anspruch 20, wobei jede der Anzahl von Cache-Zeilen (34)(k) der Nächste-Adreßabruf-Feld-Adressen (42) enthält, wobei (k) kleiner als oder gleich (n) ist.

22. Das Computersystem nach Anspruch 20, wobei jede der Anzahl von Cache-Zeilen (34)(m) Verzweigungsvorhersageelemente (40) enthält, wobei (m) gleich oder kleiner als (n) ist.

23. Das Computersystem nach Anspruch 20, wobei jede der Anzahl von Cache-Zeilen (34) ein Verzweigungsvorhersagefeld (40) zum Speichern von Verzweigungsvorhersageinformationen für einen dominierenden Befehl unter den (n) Befehlen in jeder der Anzahl von Cache-Zeilen (34) in dem Befehls-Cache (16) enthält.

24. Das Computersystem nach Anspruch 4, wobei die in dem dem ersten Befehl zugeordneten Nächste-Adreßabruf-Feld (40) gespeicherte nächste Abrufadresse in Übereinstimmung mit einer vorgegebenen Verfahrensweise initialisiert wird, wenn der erste Befehl in den Befehls-Cache (16) aus dem Speicher (20) gebracht wird.

25. Das Computersystem nach Anspruch 4, wobei der Befehls-Cache (16) ferner ein Befehlsdecodierfeld zum Speichern von Befehlsdecodierinformationen für den ersten Befehl enthält.

26. Das Computersystem nach Anspruch 25, wobei die Befehlsdecodierinformationen einen Klassenidentifizierer zum Identifizieren der Klasse des ersten Befehls enthalten.

27. Das Computersystem nach Anspruch 4, wobei die nächste Abrufadresse eine vorhergesagte nächste Abrufadresse ist.

28. Ein Verfahren zum Bereitstellen eines Computersystems zum Ausführen von Befehlen eines Computerprogramms, wobei das Computersystem eine Ausführungseinheit aufweist, wobei das Verfahren gekennzeichnet ist durch die Schritte:
Bereitstellen einer Schaltung (16) zum Abrufen von Befehlen aus einem Speicher;
Bereitstellen einer Schaltung (16) zum unabhängigen Decodieren jedes Befehls ohne Rücksicht auf irgendwelche Abhängigkeiten des Befehls von irgendwelchen anderen Befehlen, um die Klasse des jeweiligen Befehls zu bestimmen; und
Bereitstellen eines Befehls-Cache (16) zum Speichern jedes Befehls und der unabhängigen zugehörigen Klasseninformationen für diesen Befehl.

29. Das Verfahren nach Anspruch 28, wobei die Klasse des Befehls aus einer Gruppe ausgewählt wird, die Gleitkommaoperationen, Ganzzahloperationen, Speicherzugriffsoperationen und Verzweigungsoperationen umfaßt.

30. Das Verfahren nach Anspruch 29, wobei die die Klasse des abgerufenen Befehls anzeigenden Daten und der Befehl in einer Cache-Zeile (24) des Befehls-Cache (16) gespeichert werden.

31. Das Verfahren nach Anspruch 28, ferner gekennzeichnet durch die Schritte:
Bereitstellen eines Befehls-Cache (16) zum Speichern einer Mehrzahl von Befehlen des Computerprogramms, wobei der Befehls-Cache (16) umfaßt:
Bereitstellen eines Befehlsfeldes zum Speichern eines in der Mehrzahl von Befehlen enthaltenden ersten Befehls;
Bereitstellen eines Befehlsadreßfeldes zum Speichern einer dem ersten Befehl entsprechenden Adresse;
Bereitstellen eines dem ersten Befehl zugeordneten Nächste-Adreßabruf-Feldes (42) zum Speichern einer nächsten Abrufadresse, die einem zweiten Befehl entspricht, wobei die nächste Abrufadresse dem unbedingten Abrufen des zweiten Befehls dient, wenn der erste Befehl abgerufen worden ist.

32. Das Verfahren nach Anspruch 31, ferner umfassend die Schritte des Bereitstellens eines mit dem Befehls-Cache (16) gekoppelten Nächste-Abrufadresse-Registers (70) zum Empfangen einer nächsten Abrufadresse, die dem zweiten Befehl entspricht, wenn der erste Befehl aus dem Befehls-Cache (16) abgerufen worden ist.

33. Das Verfahren nach Anspruch 32, ferner umfassend den Schritt des Bereitstellens einer mit dem Nächste-Abrufadresse-Register (70) gekoppelten Vorabruf- und Abfertigungseinheit (12) zum Abrufen des zweiten Befehls, wenn die nächste Abrufadresse durch das Nächste-Abrufadresse-Register (70) empfangen worden ist.

34. Das Verfahren nach Anspruch 33, wobei die Ausführungseinheit (14) mit der Vorabruf- und Abfertigungseinheit (12) gekoppelt ist, wobei der Schritt aus dem Ausführen des ersten Befehls, nachdem die Vorabruf- und Abfertigungseinheit (12) den ersten Befehl an die Ausführungseinheit (14) abgefertigt hat, besteht.

## Revendications

1. Système informatique comprenant une unité d'exécution pour l'exécution d'instructions d'un programme informatique, caractérisé par :
- un circuit (16) pour extraire des instructions d'une mémoire (20) ;
- un circuit (16) pour décoder chaque instruction de façon indépendante afin de déterminer la classe de chaque instruction indépendamment de toute dépendance de l'instruction de quelconques autres instructions ; et
- un cache d'instruction (16) pour stocker chaque instruction et l'information correspondante indépendante de classe pour cette instruction.

2. Système informatique selon la revendication 1, dans lequel la classe de l'instruction est sélectionnée à partir d'un groupe comprenant des opérations à virgule flottante, des opérations sur entiers, des opérations d'accès en mémoire et des opérations de branchement.

3. Système informatique selon la revendication 1, dans lequel des données indiquant la classe de l'instruction extraite et l'instruction sont stockées dans une ligne de cache (34) du cache d'instruction (16).

4. Système informatique selon la revendication 1, comprenant :
- un cache d'instruction (16) pour stocker une pluralité d'instructions du programme informatique, ledit cache d'instruction étant caractérisé par :
- un champ d'instruction pour le stockage d'une première instruction parmi la pluralité d'instructions ;
- un champ d'adressage d'instruction pour stocker une adresse correspondant à la première instruction ; et
- un champ d'extraction d'adresse suivante, associé à la première instruction, pour le stockage d'une adresse suivante d'extraction correspondant à une seconde instruction, l'adresse suivante d'extraction étant prévue pour extraire sans condition la seconde instruction lorsque la première instruction est extraite.

5. Système informatique selon la revendication 4, comprenant, de plus, un registre d'adresse suivante d'extraction (70), couplé au cache d'instruction (16), pour recevoir l'adresse suivante d'extraction correspondant à la seconde instruction lorsque la première instruction est extraite du cache d'instruction (16).

6. Système informatique selon la revendication 5, comprenant, de plus, une unité de préextraction et de distribution (12), couplée au registre d'adresse suivante d'extraction (70), pour extraire la seconde instruction lorsque l'adresse suivante d'extraction est reçue par le registre d'adresse suivante d'extraction (70).

7. Système informatique selon la revendication 6, dans lequel l'unité d'exécution (14) est couplée à l'unité de préextraction et de distribution (12) pour exécuter la première instruction après la distribution de la première instruction vers l'unité d'exécution (14) par l'unité de préextraction et de distribution (12).

8. Système informatique selon la revendication 4, dans lequel l'adresse suivante d'extraction est une adresse séquentielle suivant la première instruction.

9. Système informatique selon la revendication 4, dans lequel la première instruction est une instruction de branchement et le cache d'instruction comprend, de plus, un champ de prédiction de branchement pour le stockage d'une information de prédiction de branchement.

10. Système informatique selon la revendication 9, dans lequel l'information de branchement de prédiction dans le champ de prédiction de branchement (40) est prévue pour prédire un branchement non adopté et le champ d'extraction d'adresse suivante est prévu pour stocker l'adresse séquentielle après la première instruction.

11. Système informatique selon la revendication 9, dans lequel l'information de prédiction de branchement dans le champ de prédiction de branchement (40) est prévu pour prédire un branchement adopté et le champ d'extraction d'adresse suivante (42) est prévu pour stocker un adresse cible de la première instruction.

12. Système informatique selon la revendication 9, dans lequel l'information de prédiction de branchement est mise à jour de façon dynamique selon un algorithme de prédiction de branchement.

13. Système informatique selon la revendication 4, dans lequel l'unité d'exécution (14) est couplée au cache d'instruction (16) pour l'exécution de la première instruction, l'unité d'exécution (14) comprenant, de plus, une unité de résolution pour résoudre une adresse réelle suivante d'extraction de la première instruction, et un circuit de comparaison (68) pour comparer l'adresse réelle d'extraction suivante avec l'adresse suivante d'extraction contenue dans le champ d'extraction d'adresse suivante (42) associé à la première instruction.

14. Système informatique selon la revendication 13, comprenant, de plus, une unité de préextraction (12), couplée à l'unité d'exécution (14) et au cache d'instruction (16), pour extraire une troisième instruction correspondant à l'adresse réelle d'extraction suivante et pour fournir la troisième instruction à l'unité d'exécution (14) pour une exécution si le circuit de comparaison (68) détermine le fait que l'adresse réelle d'extraction suivante de la première instruction et l'adresse suivante d'extraction contenue dans le champ d'extraction d'adresse suivante (42) associé à la première instruction sont différentes.

15. Système informatique selon la revendication 14, dans lequel l'exécution du programme informatique reprend sur la troisième instruction si le circuit de comparaison détermine que l'adresse réelle d'extraction suivante de la première instruction et l'adresse suivante d'extraction contenue dans le champ d'extraction d'adresse suivante (42) associé à la première instruction sont différentes.

16. Système informatique selon la revendication 14, dans lequel le champ d'extraction d'adresse suivante (42) associé à la première instruction est mis à jour si l'adresse réelle d'extraction suivante de la première instruction et l'adresse suivante d'extraction contenue dans le champ d'extraction d'adresse suivante (42) associé à la première instruction sont différentes.

17. Système informatique selon la revendication 4, dans lequel la seconde instruction est extraite du cache d'instruction (16).

18. Système informatique selon la revendication 4, dans lequel la seconde instruction est extraite de la mémoire (20) si la seconde instruction n'est pas dans le cache d'instruction (16).

19. Système informatique selon la revendication 4, dans lequel la seconde instruction est extraite et distribuée de façon spéculative vers l'unité d'exécution (14) pour une exécution.

20. Système informatique selon la revendication 4, dans lequel la pluralité d'instructions stockées dans le cache d'instruction (16) sont agencées selon un certain nombre de lignes de cache, chaque ligne du nombre de lignes de cache (34) comprenant (n) de la pluralité d'instructions stockées dans le cache (16).

21. Système informatique selon la revendication 20, dans lequel chaque ligne du nombre de lignes de cache (34) comprend (k) des adresses de champ d'extraction d'adresse suivante (42) avec (k) égal ou inférieur à (n).

22. Système informatique selon la revendication 20, dans lequel chaque ligne du nombre de lignes de cache (34) comprend (m) éléments de prédiction de branchement (40) avec (m) égal ou inférieur à (n).

23. Système informatique selon la revendication 20, dans lequel chaque ligne du nombre de lignes de cache (34) comprend un champ de prédiction de branchement (40) pour stocker une information de prédiction de branchement pour une instruction dominante parmi les (n) instructions dans chaque ligne du nombre de lignes de cache (34) du cache d'instruction (16).

24. Système informatique selon la revendication 4, dans lequel l'adresse suivante d'extraction stockée dans le champ d'extraction d'adresse suivante (40) associé à la première instruction est initialisée selon une directive prédéterminée lorsque la première instruction est placée dans le cache d'instruction (16) à partir de la mémoire (20).

25. Système informatique selon la revendication 4, dans lequel le cache d'instruction (16) comprend, de plus, un champ de décodage d'instruction pour stocker une information de décodage d'instruction pour la première instruction.

26. Système informatique selon la revendication 25, dans lequel l'information de décodage d'instruction comprend un identificateur de classe pour identifier la classe de la première instruction.

27. Système informatique selon la revendication 4, dans lequel l'adresse suivante d'extraction est une adresse suivante d'extraction prédite.

28. Procédé pour fournir un système informatique pour l'exécution d'instructions d'un programme informatique, le système informatique comprenant une unité d'exécution, procédé caractérisé par les étapes suivantes :
- la prévision d'un circuit (16) pour extraire des instructions d'une mémoire (20) ;
- la prévision d'un circuit (16) pour décoder chaque instruction de façon indépendante afin de déterminer la classe de chaque instruction indépendamment de toute dépendance de l'instruction de quelconques autres instructions ; et
- la prévision d'un cache d'instruction (16) pour stocker chaque instruction et l'information correspondante indépendante de classe pour cette instruction.

29. Procédé selon la revendication 28, selon lequel la classe de l'instruction est sélectionnée à partir d'un groupe comprenant des opérations à virgule flottante, des opérations sur entiers, des opérations d'accès en mémoire et des opérations de branchement.

30. Procédé selon la revendication 29, selon lequel des données indiquant la classe de l'instruction extraite et l'instruction sont stockées dans une ligne de cache (34) du cache d'instruction (16).

31. Procédé selon la revendication 28, caractérisé, de plus, par les étapes suivantes :
- la prévision d'un cache d'instruction (16) pour stocker une pluralité d'instructions du programme informatique, le cache d'instruction (16) étant caractérisé par :
- la prévision d'un champ d'instruction pour le stockage d'une première instruction parmi la pluralité d'instructions ;
- la prévision d'un champ d'adressage d'instruction pour stocker une adresse correspondant à la première instruction ; et
- la prévision d'un champ d'extraction d'adresse suivante (42), associé à la première instruction, pour le stockage d'une adresse suivante d'extraction correspondant à une seconde instruction, l'adresse suivante d'extraction étant prévue pour extraire sans condition la seconde instruction lorsque la première instruction est extraite.

32. Procédé selon la revendication 31, comprenant, de plus, une étape de prévision d'un registre d'adresse suivante d'extraction (70), couplé au cache d'instruction (16), pour recevoir l'adresse suivante d'extraction correspondant à la seconde instruction lorsque la première instruction est extraite du cache d'instruction (16).

33. Procédé selon la revendication 32, comprenant, de plus, l'étape de prévision d'une unité de préextraction et de distribution (12), couplée au registre d'adresse suivante d'extraction (70), pour extraire la seconde instruction lorsque l'adresse suivante d'extraction est reçue par le registre d'adresse suivante d'extraction (70).

34. Procédé selon la revendication 33, selon lequel l'unité d'exécution (14) est couplée à l'unité de préextraction et de distribution (12), l'étape comprenant l'exécution de la première instruction après la distribution de la première instruction vers l'unité d'exécution (14) par l'unité de préextraction et de distribution (12).
